# EUROPEAN PATENT APPLICATION

(11) **EP 4 841 458 A1**
(43) Date of publication of application: **18.11.2026**
(21) Application number: 25227105.1
(22) Date of filing: 23.12.2025
(51) Int. Cl.: G06F 16/22

(54) **METHOD FOR PROCESSING GRAPH DATABASE, DEVICE, STORAGE MEDIUM, AND PROGRAM PRODUCT**

(30) Priority: 15.05.2025 CN 202510629544
(71) Applicant: Beijing Zitiao Network Technology Co., Ltd., Beijing 100190 (CN); Bytedance Technology Ltd., KY1 - 1205 Grand Cayman Cayman Islands (KY)
(72) Inventor: CHEN, Chao, Beijing, 100028 (CN); CHEN, Cheng, 018960 Singapore (SG); ZHU, Huiming, Beijing, 100028 (CN); YANG, Shijiao, Beijing, 100028 (CN); HU, Yingqian, Beijing, 100028 (CN); ZENG, Zhigang, Beijing, 100028 (CN); ZHANG, Wei, Beijing, 100028 (CN); ZHOU, Bingyu, Beijing, 100028 (CN); CHENG, Miaomiao, Beijing, 100028 (CN); XIAO, Lei, Beijing, 100028 (CN); YANG, Ping, Beijing, 100028 (CN); WANG, Ye, Beijing, 100028 (CN); ZHANG, Shuai, Beijing, 100028 (CN); ZHANG, Lei, Beijing, 100028 (CN); ZHAO, Pengwei, Beijing, 100028 (CN)
(74) Representative: Isarpatent

(57) **Abstract**

The present disclosure provides a method for processing a graph database, a device, a storage medium, and a program product. The method includes: predicting, according to a historical query task set for an adjacency list of target graph data in the graph database, a first cumulative query cost indicator when the adjacency list is stored in a row format and a second cumulative query cost indicator when the adjacency list is stored in a column format (S201); determining a target storage format of the adjacency list according to the first cumulative query cost indicator and the second cumulative query cost indicator (S202); and storing the adjacency list in a leaf node of an index tree of the graph database by using the target storage format (S203).

## Description

### TECHNICAL FIELD

The present disclosure relates to a method for processing a graph database, a device, a storage medium, and a program product.

### BACKGROUND

A graph database is a database specifically designed for efficient storage, query, and processing of relational data, and uses a graph structure (nodes, edges, attributes) to directly represent data and its association relationships.

At present, a graph database usually uses an adjacency list to efficiently record connection relationships between vertices in a graph. However, an adjacency list of a graph database in the art is usually stored in a row format, which leads to poor query performance in the face of query tasks such as an exact query task and a column scan task.

### SUMMARY

At least one embodiment of the present disclosure provides a method for processing a graph database, a device, a storage medium, and a program product.

At least one embodiment of the present disclosure provides a method for processing a graph database, including:
predicting, according to a historical query task set for an adjacency list of target graph data in a graph database, a first cumulative query cost indicator when the adjacency list is stored in a row format and a second cumulative query cost indicator when the adjacency list is stored in a column format;
determining a target storage format of the adjacency list according to the first cumulative query cost indicator and the second cumulative query cost indicator; and
storing the adjacency list in a leaf node of an index tree of the graph database by using the target storage format.

At least one embodiment of the present disclosure provides a device for processing a graph database, including:
a predicting unit configured to predict, according to a historical query task set for an adjacency list of target graph data in a graph database, a first cumulative query cost indicator when the adjacency list is stored in a row format and a second cumulative query cost indicator when the adjacency list is stored in a column format;
a format determining unit configured to determine a target storage format of the adjacency list according to the first cumulative query cost indicator and the second cumulative query cost indicator; and
a storing unit configured to store the adjacency list in a leaf node of an index tree of the graph database by using the target storage format.

At least one embodiment of the present disclosure provides an electronic device, including: a processor and a memory,
where the memory stores computer-executable instructions; and
the processor executes the computer-executable instructions stored in the memory, so as to cause the at least one processor to execute the method for processing a graph database described above.

At least one embodiment of the present disclosure provides a computer-readable storage medium, where computer-executable instructions are stored in the computer-readable storage medium, and when the computer-executable instructions are executed by a processor, the method for processing a graph database described above is implemented.

At least one embodiment of the present disclosure provides a computer program product, including a computer program, where when the computer program is executed by a processor, the method for processing a graph database described above is implemented.

### BRIEF DESCRIPTION OF DRAWINGS

In order to more clearly describe the technical solutions in the present disclosure, the following briefly introduces the drawings that need to be used in present disclosure. Obviously, the drawings in the following description are some embodiments of the present disclosure, and for those of ordinary skill in the art, other drawings may also be obtained from these drawings without creative effort.
Fig. 1 is a scenario example diagram of a method for processing a graph database provided by at least one embodiment of the present disclosure;
Fig. 2 is a schematic flowchart of a method for processing a graph database provided by at least one embodiment of the present disclosure;
Fig. 3 is a schematic flowchart of a method for processing a graph database provided by at least another embodiment of the present disclosure;
Fig. 4 is a schematic diagram of an adjacency list stored in a row format provided by at least one embodiment of the present disclosure;
Fig. 5 is a schematic diagram of an adjacency list stored in a column format provided by at least one embodiment of the present disclosure;
Fig. 6 is a structural block diagram of a device for processing a graph database provided by at least one embodiment of the present disclosure; and
Fig. 7 is a schematic hardware structure diagram of an electronic device provided by at least one embodiment of the present disclosure.

### DETAILED DESCRIPTION

In order to make the purposes, technical solutions and advantages of the embodiments of the present disclosure clearer, the technical solutions in the embodiments of the present disclosure will be clearly and completely described below in conjunction with the drawings in the embodiments of the present disclosure. Obviously, the described embodiments are part of the embodiments of the present disclosure, but not all of the embodiments. Based on the embodiments in the present disclosure, all other embodiments obtained by persons of ordinary skill in the art without creative efforts fall within the protection scope of the present disclosure.

Firstly, technical terms in the present disclosure are explained:
Graph database: a database specifically designed for efficient storage, query, and processing of relational data, which uses a graph structure (nodes, edges, attributes) to directly represent data and its association relationships.
Adjacency list: one of the most commonly used storage representation methods for graph data structures, which efficiently records the connection relationships between vertices in a graph.
Row format storage: the whole row of data is continuously stored in a disk/memory;
Column format storage: each column of data is stored separately.
Exact query task (Exact Query): that is, the query condition needs to exactly match the nodes, edges or attributes in the graph, without involving fuzzy matching or complex conditions, for example, retrieving all attributes of the last 10 edges of a direct neighbor node of a specific node;
Column scan task (Wide Column Scan): a data access mode for wide-column storage databases that allows efficient scanning of datasets with a large number of columns (which may be sparsely distributed), such as scanning too many columns of data in a certain column, and filtering of specific conditions may also be performed when scanning the column of data.

A graph database usually uses an adjacency list to efficiently record the connection relationships between vertices in a graph. However, the adjacency list of the graph database is usually stored in a row format, which makes the performance excellent when performing exact query tasks such as filter, limit, property, etc., but the query performance is low in the face of a column scan task.

Considering that a database usually has row format storage and column format storage, the performance of an exact query task and a column scan task is evaluated, and it is found that when QPS is low, the difference in CPU consumption between different data formats is not significant. However, as QPS increases, differences in CPU consumption gradually emerge. Specifically, using the same number of CPU cores, in the scenario of an exact query task, the limit throughput of the row format is 1.65 times that of the column format. On the contrary, in the scenario of a column scan task, the limit throughput in the column format is 2.02 times that in the row format.

In view of different requirements of an exact query task and a column scan task, a traditional database has a mature practice. It is widely believed that row storage is more suitable for the exact query task, while column storage is more in line with requirements of the column scan task. The above test conclusion also verifies that this practice is still applicable and effective in the workload of a graph database. In the case that the throughput of an OLTP workload is very high and may reach one million QPS in a single cluster, performance optimization has become our primary task. Therefore, it is necessary to design a dual-format storage solution for an adjacency list, which is optimized for the exact query task (row scan) and the column scan respectively, so as to fully meet high-performance requirements of different workloads.

The cost increase caused by multiple storage formats needs to be effectively controlled. In response to the dual challenges of massive data and flexible and changeable workloads, a traditional HTAP database generally adopts a data redundancy means, that is, simultaneously maintains two formats of row storage and column storage, to optimize performance. However, in a scenario of processing a huge amount of data, this practice inevitably leads to a sharp increase in storage costs. In order to adapt to requirements of different business scenarios, although the dual-format storage is adopted, which improves data processing efficiency, it also faces the problem of data redundancy. Considering that graph data and its access mode generally follow a power law distribution, it is obviously not cost-effective to fully redundant multiple formats for an adjacency list with a small amount of data and low access throughput. In view of this, it is necessary to deeply analyze the distribution characteristics of the graph data, and design a highly adaptable data storage solution to meet the requirements of the business in reducing storage costs.

In order to solve the above technical problems, at least one embodiment of the present disclosure provides a method for processing a graph database, in which a first cumulative query cost indicator when an adjacency list is stored in a row format and a second cumulative query cost indicator when the adjacency list is stored in a column format are predicted according to a historical query task set for the adjacency list of target graph data in a graph database; a target storage format of the adjacency list is determined according to the first cumulative query cost indicator and the second cumulative query cost indicator; and the adjacency list is stored in a leaf node of an index tree of the graph database by using the target storage format. In the embodiment, for the adjacency list of the target graph data, in combination with the historical query task set, the target storage format of the adjacency list is dynamically selected by measuring query costs of different storage formats, which may reduce storage costs, avoid unnecessary data redundancy, optimize resource utilization, and improve query performance of a query task.

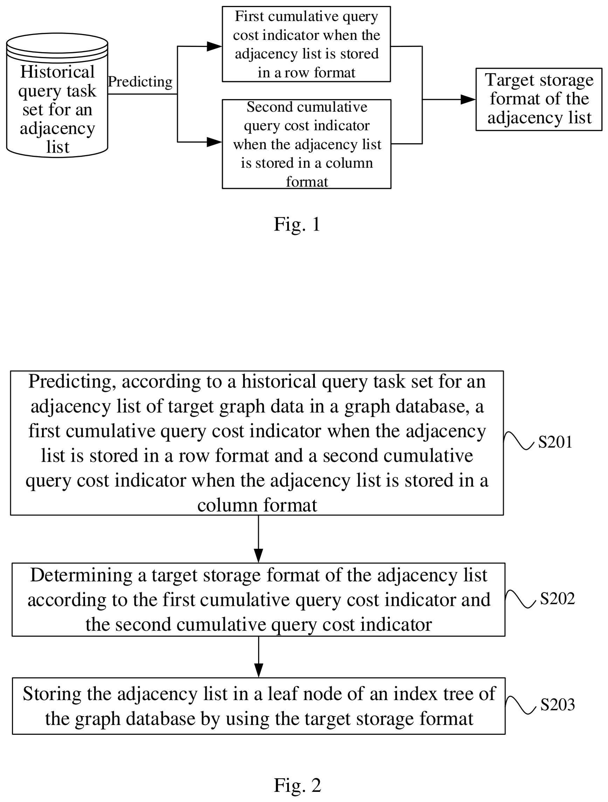

An application scenario of the method for processing a graph database in at least one embodiments of the present disclosure is shown in Fig. 1, in which a first cumulative query cost indicator when an adjacency list is stored in a row format and a second cumulative query cost indicator when the adjacency list is stored in a column format are predicted according to a historical query task set for the adjacency list of target graph data in a graph database; a target storage format of the adjacency list is determined according to the first cumulative query cost indicator and the second cumulative query cost indicator; and the adjacency list is stored in a leaf node of an index tree of the graph database by using the target storage format.

It should be noted that the enabling of related functions, acquired data, data processing and storage manners, etc. in at least one embodiment of the present disclosure shall be subject to prior authorization of the user and other rights subjects associated with the user, and shall comply with the provisions of relevant laws and regulations and agreement rules between rights subjects.

The method for processing a graph database of the present disclosure will be described in detail below in conjunction with specific embodiments.

Referring to Fig. 2, Fig. 2 is a schematic flowchart of a method for processing a graph database provided by at least one embodiment of the present disclosure. The method of this embodiment may be applied to an electronic device such as a terminal device or a server. The method for processing a graph database includes:
S201, predicting, according to a historical query task set for an adjacency list of target graph data in a graph database, a first cumulative query cost indicator when the adjacency list is stored in a row format and a second cumulative query cost indicator when the adjacency list is stored in a column format.

In this embodiment, the graph database may include multiple pieces of graph data, where the graph data includes nodes and edges connecting the nodes, where the nodes may represent entities, such as people, places, products, events, etc., and the edges may represent the connection relationships between the nodes, and attributes are information attached to the nodes or the edges for storing features of the entities or metadata of the relationships. For any piece of graph data in the graph database, an adjacency list may be used to represent a graph data structure, to efficiently describe the connection relationships and attributes between the nodes. In the adjacency list, one row of data represents the connection relationship and attributes between a node and a neighbor node. In response to a node having multiple neighbor nodes, the connection relationship and attributes between the node and each neighbor node occupy one row of data.

However, an adjacency list of a traditional graph database is usually stored in a row format, and the whole row of data of the adjacency list is continuously stored together. However, the adjacency list stored in a single row format may not meet different query tasks, especially a column scan task, and has poor workload performance. It may be considered to use dual-format storage of a row format and a column format for the adjacency list, where the column format is to store each column of data of a neighbor node separately, which may be more in line with requirements of the column scan task. However, if the adjacency lists of all graph data in the graph database adopt the dual-format storage, although the performance may be improved, there will be a problem of cost increase due to data redundancy, especially for an adjacency list with a small amount of data and low access throughput, it is not cost-effective. Alternatively, for an adjacency list with few column scan tasks, the column format storage in the dual-format storage may lead to an increase in cost, and for an adjacency list with few exact query tasks, the row format storage in the dual-format storage may lead to an increase in cost, etc. In order to avoid unnecessary data redundancy and reduce storage costs, in this embodiment, a suitable storage format may be dynamically selected for the adjacency list of the target graph data according to the historical query task of the adjacency list of the target graph data, rather than fixedly using a single format storage or fixedly using the dual-format storage, so as to optimize resource utilization.

Specifically, in this embodiment, a historical query task set for the adjacency list of the target graph data may be acquired, which may include a historical exact query task and a historical column scan task, and the historical query task set may be a historical query task set within a predetermined period of time in the past. Further, a first cumulative query cost indicator when the adjacency list is stored in the row format and a second cumulative query cost indicator when the adjacency list is stored in the column format may be predicted according to the historical query task set. For any exact query task, a query cost indicator when the adjacency list is stored in the row format is usually lower than a query cost indicator when the adjacency list is stored in the column format, while for any column scan task, the query cost indicator when the adjacency list is stored in the row format is usually higher than the query cost indicator when the adjacency list is stored in the column format. Therefore, query costs indicator of each exact query task and each column scan task may be predicted and accumulated when the adjacency list is stored in the row format, to obtain the first cumulative query cost indicator, and query cost indicators of each exact query task and each column scan task may be predicted and accumulated when the adjacency list is stored in the column format, to obtain the second cumulative query cost indicator, so as to determine a target storage format of the adjacency list by comparing the first cumulative query cost indicator with the second cumulative query cost indicator, so as to reduce unnecessary data redundancy and reduce storage costs.

Optionally, in this embodiment, the query cost indicator may be measured by query time consumption, or may be measured by resource consumption, or may be measured by other consumption, or multiple types of consumption may be comprehensively considered.

S202, determining a target storage format of the adjacency list according to the first cumulative query cost indicator and the second cumulative query cost indicator.

In this embodiment, after the first cumulative query cost indicator and the second cumulative query cost indicator are predicted, the target storage format of the adjacency list may be determined based on the first cumulative query cost indicator and the second cumulative query cost indicator.

Optionally, the sizes of the first cumulative query cost indicator and the second cumulative query cost indicator may be simply considered. In response to the first cumulative query cost indicator is greater than the second cumulative query cost indicator, the target storage format is a row format; in response to the first cumulative query cost indicator is less than the second cumulative query cost indicator, the target storage format is a column format; in response to the first cumulative query cost indicator is equal to the second cumulative query cost indicator, either the row format or the column format may be used, and there is no need to perform storage format conversion, and the current storage format may be maintained.

Optionally, the following logic for determining the target storage format may also be adopted:
determining that the target storage format is a dual format in response to the first cumulative query cost indicator and the second cumulative query cost indicator both exceeding a preset cost threshold, where the dual format is a coexistence of the row format and the column format;
determining a difference between the first cumulative query cost indicator and the second cumulative query cost indicator in response to at least one of the first cumulative query cost indicator and the second cumulative query cost indicator not exceeding the preset cost threshold;
determining that the target storage format is a storage format corresponding to a smaller one of the first cumulative query cost indicator and the second cumulative query cost indicator in response to the difference exceeding a preset difference;
determining that the target storage format is a current storage format in response to the difference not exceeding the preset difference.

In this embodiment, if the first cumulative query cost indicator and the second cumulative query cost indicator both exceed the preset cost threshold, it indicates that both the first cumulative query cost indicator and the second cumulative query cost indicator are high, that is, the query cost of using a certain storage format alone is high. Therefore, the target storage format is determined to be a dual format in which the row format and the column format coexist, so that the data in the row format may be applied to the exact query task, and the data in the column format may be applied to the column scan task, which may effectively reduce the query cost.

In response to at least one of the first cumulative query cost indicator and the second cumulative query cost indicator does not exceed the preset cost threshold, it indicates that the cost of using the storage format corresponding to the smaller one of the cumulative query cost indicators is relatively not high. However, since the storage format conversion also requires certain resource and time consumption, it is also necessary to consider whether it is necessary to perform the storage format conversion. The gap between the first cumulative query cost indicator and the second cumulative query cost indicator may be compared. If the difference (absolute value) between the first cumulative query cost indicator and the second cumulative query cost indicator exceeds the preset difference, it indicates that the gap between the first cumulative query cost indicator and the second cumulative query cost indicator is relatively large, and the benefit of executing the query task after the storage format conversion (that is, the reduced query cost) is greater than the consumption of executing the storage format conversion process. Therefore, the storage format corresponding to the smaller one of the cumulative query cost indicators may be selected as the target storage format. **In** response to the difference (absolute value) between the first cumulative query cost indicator and the second cumulative query cost indicator does not exceed the preset difference, it indicates that the gap between the first cumulative query cost indicator and the second cumulative query cost indicator is not large, and the benefit of executing the query task after the storage format conversion (that is, the reduced query cost) is not greater than the consumption of executing the storage format conversion process. Therefore, the storage format conversion may not be performed, and the current storage format may be maintained. The current storage format is the storage format currently used, which may be a row format or a column format.

Certainly, other logic of the target storage format may also be adopted in this embodiment, which is not limited in this embodiment.

S203, storing the adjacency list in a leaf node of an index tree of the graph database by using the target storage format.

In this embodiment, after the target storage format of the adjacency list of the target graph data is determined, the adjacency list may be stored by using the target storage format. In this embodiment, the adjacency list may be stored in the leaf node of the index tree of the graph database by using the target storage format, where the index tree is an index structure specially optimized for a graph data model, which is used to accelerate the searching, traversing and relationship query of nodes, edges and attributes. An optional index tree may be a BW index tree, and the BW index tree is divided into three layers, which are a BW tree index layer (root), a buffer layer (internal) and a storage layer from top to bottom. The BW tree index layer provides an API for operating this index tree structure to the outside. The buffer layer connects the index layer and the storage layer, and records the mapping from a logical page number to a physical pointer through a mapping table. The storage layer may include multiple leaf nodes (LeafPage). The data of an adjacency list is usually stored in the same leaf node, and the leaf node may provide two different storage formats for the adjacency list, so the adjacency list may be stored in the leaf node by using the target storage format.

Whether a row format or a column format is used, the basic structure in the leaf node is similar, which is mainly including a pointer array Pointer Array and data blocks Blocks (which may include Rows Blocks or Column Blocks).

It should be noted that the above method for processing a graph database may be executed according to a manual trigger instruction, or may be executed periodically, or executed when it is detected that the situation of the exact query task and the column scan task has changed or the query cost has changed (for example, the time consumption is extended, etc.), so that the target storage format of the adjacency list may be dynamically adjusted to adapt to changes of various situations, optimize performance and control costs.

According to the method for processing a graph database provided by this embodiment, a first cumulative query cost indicator when an adjacency list is stored in a row format and a second cumulative query cost indicator when the adjacency list is stored in a column format are predicted according to a historical query task set for the adjacency list of target graph data in a graph database; a target storage format of the adjacency list is determined according to the first cumulative query cost indicator and the second cumulative query cost indicator; and the adjacency list is stored in a leaf node of an index tree of the graph database by using the target storage format. In the embodiment, for the adjacency list of the target graph data, in combination with the historical query task set, the target storage format of the adjacency list is dynamically selected by measuring query costs of the adjacency list in the row format and the column format, which may reduce storage costs, avoid unnecessary data redundancy, optimize resource utilization, and improve query performance of a query task.

Based on the above method for processing a graph database, real query tasks of different proportions of OLTP (Online Transaction Processing) and OLAP (Online Analytical Processing) are selected for testing. A single row format storage, a single column format storage, a dual-format storage and the method for dynamically selecting a target storage format in at least one embodiment of the present disclosure are respectively used for an adjacency list to evaluate the limit throughput performance. The method for dynamically selecting a target storage format in at least one embodiment of the present disclosure improves the performance by about 31.8%, 53.5% and 70.5% respectively in three scenarios of "more OLTP", "OLTP equal to OLAP" and "more OLAP", compared with the single row format storage; and the performance is improved by about 40%, 19.1% and 11.7% respectively, compared with the single column format storage. The dual-format storage serves OLTP and OLAP respectively by redundant data in two types of formats of rows and columns, to obtain the most extreme performance, but it brings about twice as much idle overhead as the single row format storage or the single column format storage. The method for dynamically selecting a target storage format in at least one embodiment of the present disclosure saves 41.25%, 45.75% and 47.25% of storage space respectively, compared with the dual-format storage, while the optimal performance is only reduced by about 2.2%, 5.3% and 3.7%.

On the basis of any of the above embodiments, predicting, according to the historical query task set for the adjacency list of the target graph data in the graph database, the first cumulative query cost indicator when the adjacency list is stored in the row format and the second cumulative query cost indicator when the adjacency list is stored in the column format includes:
acquiring task scale features of query tasks included in the historical query task set, where the task scale features include the count of rows of data queried by a query task and the count of attributes queried in the rows of data; and
predicting, according to the task scale features of the query tasks, the first cumulative query cost indicator when the adjacency list is stored in the row format and the second cumulative query cost indicator when the adjacency list is stored in the column format.

In this embodiment, when predicting the first cumulative query cost indicator when the adjacency list is stored in the row format and the second cumulative query cost indicator when the adjacency list is stored in the column format, considering that each exact query task and each column scan task have different task scale features, the corresponding query costs are also different. The greater the count of rows of data a query task queries, the greater the query cost is, and the greater the number of attributes queried in the row of data is, the greater the query cost is. Therefore, the task scale features of the exact query task and the column scan task included in the historical query task set may be acquired, and then, according to the task scale features of the exact query task and the column scan task, the query cost of each exact query task and each column scan task when the adjacency list is stored in the row format and the column format is respectively predicted, and then, through accumulation, the first cumulative query cost indicator when the adjacency list is stored in the row format and the second cumulative query cost indicator when the adjacency list is stored in the column format are obtained, thereby improving the accuracy of predicting the first cumulative query cost indicator and the second cumulative query cost indicator.

Further, predicting, according to the task scale features of the query tasks, the first cumulative query cost indicator when the adjacency list is stored in the row format and the second cumulative query cost indicator when the adjacency list is stored in the column format may specifically include:
determining unit cost indicators of query behaviors in various types of query tasks of the adjacency list in different storage formats, where the types of the query tasks include an exact query task and a column scan task;
predicting, according to the task scale feature of each query task and the unit cost indicators, a query cost indicator of each query task when the adjacency list is stored in the row format and a query cost indicator of each query task when the adjacency list is stored in the column format; and
accumulating the query cost indicators of the query tasks when the adjacency list is stored in the row format to obtain the first cumulative query cost indicator, and accumulating the query cost indicators of the query tasks when the adjacency list is stored in the column format to obtain the second cumulative query cost indicator.

In this embodiment, the unit cost indicators of the query behaviors in various types of query tasks of the adjacency list in different storage formats are different. The unit cost indicators of the query behaviors include but not limited to a unit cost of querying a single leaf node where the adjacency list is located, a unit cost of querying a certain row of data of the adjacency list, and a unit cost of querying a certain attribute in a certain row. The unit cost indicators of the query behaviors in various types of query tasks of the adjacency list in different storage formats may be determined in combination with historical query tasks. Further, according to the task scale features of the exact query task and the column scan task and the above unit cost, the query cost of each query task when the adjacency list is stored in the row format may be more accurately and conveniently predicted and accumulated to obtain the first cumulative query cost indicator, and the query cost of each query task when the adjacency list is stored in the column format may be predicted and accumulated to obtain the second cumulative query cost indicator. When the adjacency list is stored in the row format or the column format, the cost of any query task to locate the leaf node where the adjacency list is located may be determined according to the above unit cost indicator, and the cost of the query task to query all target row target attributes is determined according to the task scale feature and the above unit cost indicator, and accumulated to obtain the query cost indicator of the query task.

Optionally, considering that the predicted cost indicator has a high requirement for timeliness, in order to simplify the prediction process, in this embodiment, the unit cost indicators of some query behaviors of the adjacency list are represented by average cost indicators. Specifically, the unit cost indicators of the query behaviors in various types of query tasks of the adjacency list in different storage formats may specifically include a first cost constant, a second cost constant, a first unit cost, a second unit cost, and a third unit cost.

The first cost constant (denoted as C) is an average cost indicator of each query task of the adjacency list for positioning single leaf node, caching overhead and reading and write overhead. The second cost constant (denoted as B) is an average cost indicator of each query task of the adjacency list for single row of data positioning and row of data version query. The first unit cost (denoted as *a_{row}*) is an average cost indicator of any query task for single attribute query in any row of data when the adjacency list is stored in the row format. The second unit cost (denoted as ${a}_{col , eq}^{′}$) and the third unit cost (denoted as ${a}_{col , wcs}^{′}$) are respectively an average cost indicator of the exact query task and an average cost indicator of the column scan task for single attribute query in any column of data when the adjacency list is stored in the column format.

By using the corresponding average cost indicator to represent the above cost feature, the requirement for timeliness may be reduced, and the difficulty in prediction caused by short-term fluctuation of the cost feature with time may be avoided.

On the basis of the above embodiment, predicting the first cumulative query cost indicator when the adjacency list is stored in the row format may specifically include:
for any query task of the exact query task and the column scan task, determining a query cost indicator of any row of data according to the count of attributes queried in the row of data, the first unit cost and the second cost constant; and determining a query cost indicator of any query task according to the query cost indicator of any row of data, the count of rows of data queried and the first cost constant; and
accumulating the query cost indicators of the query tasks to obtain the first cumulative query cost indicator when the adjacency list is stored in the row format.

In this embodiment, when the adjacency list is stored in the row format, whether for any exact query task or any column scan task, it is necessary to locate the leaf node according to query conditions, that is, locate the leaf node where the adjacency list is located, and there may also be cache overhead and read and write overhead, and this part of the query cost is the above first cost constant C.

Secondly, whether for any exact query task or any column scan task, it is also necessary to locate the row of data queried in the adjacency list according to the query conditions. Usually, row location is performed through a pointer array (Pointer Array). In response to different versions being involved, it is also necessary to locate the row of data of the required version. This part of the query cost is the above second cost constant B.

Then, for any exact query task or any column scan task, it is also necessary to query the required attribute from the row of data, and the query cost is positively correlated with the count of attributes queried. The first unit cost *a_{row}* is an average cost indicator of any query task for single attribute query in any row of data when the adjacency list is stored in the row format, so the query cost indicator for querying each row of data is also *Cost_{single_row}* = *a_{row}* × *Nₐₜₜᵣ + B,* where *Nₐₜₜᵣ* is the count of attributes queried in the row of data.

In response to a query task needing to query multiple rows of data, the query cost indicator of the multiple rows of data is *Cost_{multi_row}* = *N_{rows}* × *Cost_{single_row},* where *N_{rows}* is the count of rows of data queried.

The query cost indicators of each query task are accumulated to obtain the first cumulative query cost indicator:
${Cost}_{row} = {\sum }_{i = 1}^{Q} \left({Cost}_{multi _ row _ i}+C\right)$
where i represents the ith query task, and the value of i ranges from 1 to Q, and Q represents the number of query tasks in the historical query task set.

On the basis of the above embodiment, predicting the second cumulative query cost indicator when the adjacency list is stored in the column format may specifically include:
for any exact query task, determining a query cost indicator of any row of data according to the count of attributes queried in the row of data, the second unit cost and the second cost constant; and determining a query cost indicator of any exact query task according to the query cost indicator of any row of data, the count of rows of data queried and the first cost constant;
for any column scan task, determining a query cost indicator of any column of data according to the count of rows of data queried and the second unit cost; and determining a query cost indicator of any column scan task according to the query cost indicator of any column of data, the count of attributes queried in the row of data and the first cost constant; and
accumulating the query cost indicator of each exact query task and the query cost indicator of each column scan task to obtain the second cumulative query cost indicator when the adjacency list is stored in the column format.

In this embodiment, when the adjacency list is stored in the column format, there is a certain difference between the query cost of the exact query task and the query cost of the column scan task.

First, when the adjacency list is stored in the column format, whether for any exact query task or any column scan task, it is necessary to locate the leaf node according to query conditions, that is, locate the leaf node where the adjacency list is located, and there may also be cache overhead and read and write overhead, and this part of the query cost is the above first cost constant. It should be noted that the first cost constant may be different for the exact query task or the column scan task, which are respectively represented by ${C}_{col , eq}^{′}$ and ${C}_{col , wcs}^{′}$.

Secondly, for any exact query task, the query process when the adjacency list is stored in the column format is very similar to that when the adjacency list is stored in the row format, but due to the different storage manners of rows and columns, the cost of accessing an attribute is also different. In this embodiment, the second unit cost (denoted as ${a}_{col , eq}^{′}$) is used to represent an average cost indicator of the exact query task for single attribute query in any column of data when the adjacency list is stored in the column format. Therefore, in response to any exact query task needing to query *Nₐₜₜᵣ* attributes of any row of data, it is necessary to access *Nₐₜₜᵣ* columns of data, that is, the query cost indicator for the exact query task to query any row of data is ( ${a}_{col , eq}^{′} \times {N}_{attr} + B$), and in response to an exact query task needs to query multiple rows of data, the query cost indicator of the multiple rows of data is ${Cost}_{col , eq , multi _ row} = {N}_{rows} \times \left({a}_{col , eq}^{′}\times {N}_{attr}+B\right)$, where *N_{rows}* is the number of rows of data queried.

For any column scan task, when the adjacency list is stored in the column format, it is necessary to scan each column of data to obtain data that meets the filtering conditions, and the access cost of each column of data is proportional to the number of rows that need to be accessed and scanned. In this embodiment, the third unit cost ${a}_{col , wcs}^{′}$ is used to represent an average cost indicator of the column scan task for single attribute query in any column of data when the adjacency list is stored in the column format, that is, an average cost indicator of scanning one row in the column of data. Therefore, for any column scan task, the query cost indicator for scanning each column is ${a}_{col , wcs}^{′} \times {N}_{rows}$, and in response to a column scan task needing to access multiple columns of data, the query cost indicator of the multiple columns of data is ${Cost}_{col , wcs , multi _ row} = {a}_{col , eq}^{′} \times {N}_{rows} \times {N}_{attr}$.

The query cost indicator of each exact query task and the query cost indicator of each column scan task are accumulated to obtain the second cumulative query cost indicator: ${Cost}_{col} = {\sum }_{i = 1}^{{Q}_{wcs}} \left({Cost}_{col , wcs , multi _ row}+{C}_{col , wcs}^{′}\right) + {\sum }_{i = 1}^{{Q}_{eq}} \left(\begin{matrix}{Cost}_{col , eq , multi _ row} + \\ {C}_{col , eq}^{′}\end{matrix}\right)$
where i represents the ith query task, *Q_{wcs}* represents the count of column scan tasks in the historical query task set, and *Q_{eq}* represents the count of exact query tasks in the historical query task set.

On the basis of any of the above embodiments, the unit cost indicators of the query behaviors in various types of query tasks of the adjacency list in different storage formats, including the first cost constant, the second cost constant, the first unit cost, the second unit cost, the third unit cost, etc., may be determined based on historical query tasks. For example, assuming that the query time consumption is the cost indicator, the task scale features and time consumption of a sample adjacency list stored in the row format in executing various exact query tasks and column scan tasks may be acquired, and the task scale features and time consumption of a sample adjacency list stored in the column format in executing various exact query tasks and column scan tasks are acquired, and respectively substituted into the above formulas, and each unit cost indicator is solved with each unit cost indicator as an unknown number to be solved.

On the basis of any of the above embodiments, storing the adjacency list by using the target storage format may specifically include:
cleaning data in a non-target storage format of the adjacency list through garbage collection, in response to a current storage format of the adjacency list being a dual format, and the target storage format being the row format or the column format;
converting data in the current storage format of the adjacency list into data in the target storage format, in response to the current storage format of the adjacency list being not the dual format and the target storage format being different from the current storage format.

In this embodiment, in response to the current storage format of the adjacency list being the dual format, and the target storage format is a single storage format of the row format or the column format, in fact, no real storage format conversion occurs, and only the cleaning of redundant data is involved. Therefore, it is only necessary to clean the data in the non-target storage format of the adjacency list through garbage collection. For example, if the current storage format is the dual format and the target storage format is the row format, it is only necessary to keep the row format and clean the column format.

In response to the current storage format of the adjacency list being not the dual format, and the target storage format being different from the current storage format, it involves the storage format conversion, that is, the conversion from the row format to the column format, or the conversion from the column format to the row format, and the conversion from the row format to the column format, or the conversion from the column format to the row format is also involved in the process of converting from the single storage format to the dual format.

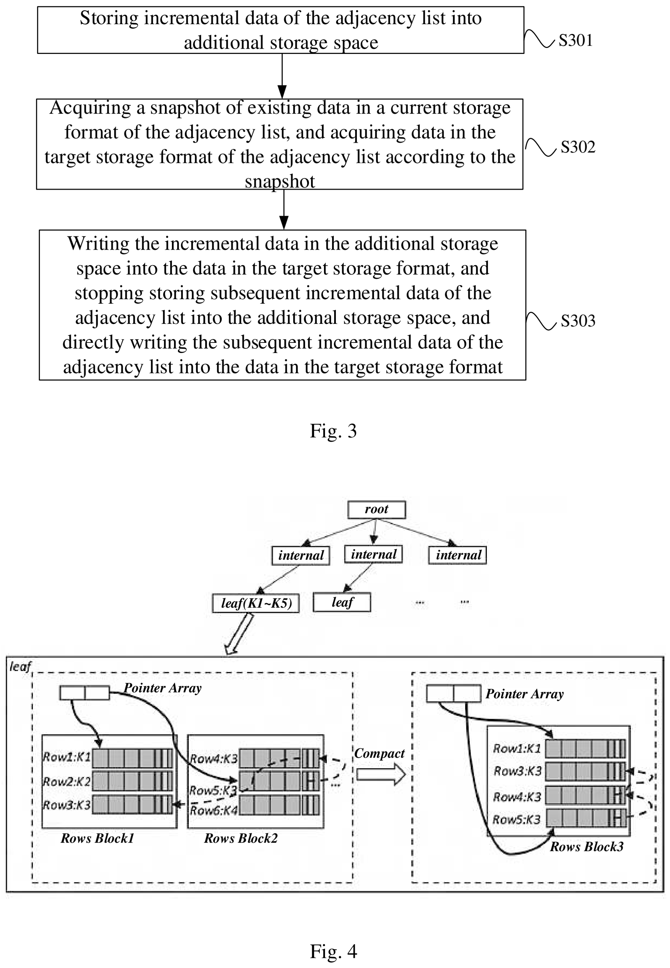

In the above embodiment, when the storage format conversion is involved, considering that the adjacency list may still be updated in real time, in order to ensure that the storage format conversion does not affect the online real-time update of the adjacency list and update data is not lost, the storage format conversion process may be shown in Fig. 3, which specifically includes:
S301, storing incremental data of the adjacency list into additional storage space;
S302, acquiring a snapshot of existing data in the current storage format of the adjacency list, and acquiring data in the target storage format of the adjacency list according to the snapshot; and
S303, writing the incremental data in the additional storage space into the data in the target storage format, and stopping storing subsequent incremental data of the adjacency list into the additional storage space, and directly writing the subsequent incremental data of the adjacency list into the data in the target storage format.

In this embodiment, when the adjacency list is updated, incremental data needs to be written into the adjacency list. The incremental data may be intercepted, and the incremental data is first stored in an additional storage space instead of being directly written into the adjacency list. Then, a snapshot of existing data in the current storage format of the adjacency list is acquired and converted into data in the target storage format on the basis of the snapshot, that is, converted from the row format to the column format, or converted from the column format to the row format on the basis of the snapshot. Then, the incremental data in the additional storage space is written into the data in the target storage format, and the subsequent incremental data of the adjacency list is stopped from being stored into the additional storage space, and the subsequent incremental data of the adjacency list is directly written into the data in the target storage format, thus completing the storage format conversion and reducing the impact on the adjacency list update.

Optionally, in S303, in the process of writing the incremental data in the additional storage space into the data in the target storage format, the incremental data of the adjacency list may continue to be stored into the additional storage space, which may result in that it is impossible to finish writing all the incremental data in the additional storage space into the data in the target storage format. Therefore, when the incremental data in the additional storage space is written into the data in the target storage format, and when the incremental data in the additional storage space is less than a preset data amount, the subsequent incremental data of the adjacency list may be stopped from being stored into the additional storage space. After all the incremental data in the additional storage space is written into the data in the target storage format, the subsequent incremental data of the adjacency list is then directly written into the data in the target storage format, thus reducing the time of affecting the adjacency list update, and the storage format conversion does not need to be performed offline.

It should be noted that in response to the current storage format of the adjacency list being a single storage format, and the target storage format is another single storage format, when the incremental data in the additional storage space is written into the data in the target storage format, the incremental data in the additional storage space is also written into the data in the current storage format synchronously. When the subsequent incremental data of the adjacency list may be directly written into the data in the target storage format and the data in the current storage format normally, the data in the current storage format of the adjacency list is then cleaned through garbage collection, which ensures the security of the storage format conversion process and avoids data loss caused by conversion failure. Certainly, in response to the target storage format being the dual format, there is no need to clean the data in the current storage format of the adjacency list through garbage collection.

On the basis of any of the above embodiments, the method further includes:
receiving a target exact query task for the adjacency list of the target graph data; and searching, in the index tree of the graph database, for a leaf node where the adjacency list of the target graph data is located according to the target exact query task;
searching for target row of data in the leaf node according to the target exact query task, and acquiring a query result according to the target row of data in response to the target storage format being the row format or the column format;
searching for target row of data in data in the row format in the leaf node according to the target exact query task, and acquiring a query result according to the target row of data, in response to the target storage format being a dual format.

In this embodiment, subsequent query tasks may be executed based on the data in the target storage format of the above adjacency list.

A data query interface of the leaf node LeafPage of the index tree has two key features: one is row scan and filtering capability, and the other is column scan capability of a large amount of data. In addition, it also supports a multi-version storage mechanism to meet the multi-version concurrency control requirements of transactions. The row scan function enables users to quickly locate specific row of data based on the index tree, and on this basis, traverse adjacent row of data along a specified direction. In the traversal process, data that meets requirements is selected according to attribute filtering conditions, and the required specific version is retrieved along a version chain. For example, when querying the latest 10 liked videos (that is, neighbor nodes of a user node) of a certain user node, the like time is an attribute on an edge, and a video record is located from the current time point, and 10 edges are retrieved in reverse order. Secondly, the LeafPage provides column scan capability for a large amount of data, and this query may perform a large-scale scan on all data in the LeafPage, including neighbor vertices and required attributes, which is mainly suitable for a complex multi-degree analysis scenario. In the scanning process, the system judges according to a timestamp-related column of the data to ensure that a data version that meets time requirements is acquired.

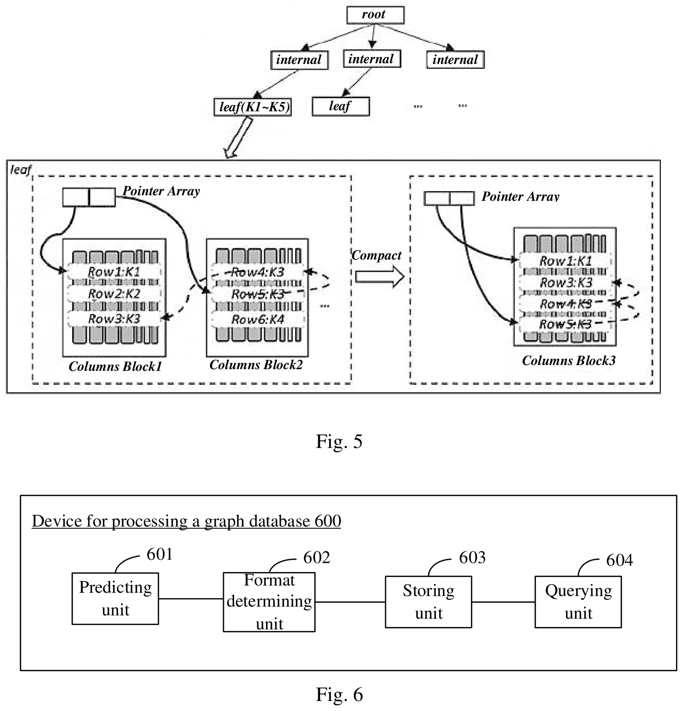

The adjacency list of the target graph data stored in the row format may be shown in Fig. 4, and the adjacency list of the target graph data stored in the column format may be shown in Fig. 5.

Further, for the target exact query task, such as querying all attributes of K3 in the adjacency list in Fig. 4 and Fig. 5, whether the adjacency list of the target graph data uses the row format or the column format, it is necessary to first search for the leaf node leaf (K1-K5) where the adjacency list of the target graph data is located in the index tree. In the next step, there is little difference in the query process for row storage and column storage. The target row of data may be searched for in the leaf node according to the target exact query task, and the query result may be acquired according to the target row of data. In specific implementation, after the leaf node where the adjacency list is located is located, the target row of data is searched for according to the pointer array (Pointer Array), and then whether the version of the target row of data meets the required version requirements is determined. For example, MVCC (Multi-Version Concurrency Control) requires that the version creation time must match the creation time of the target exact query task. In response to the required version requirements being not met, the version that meets the required version requirements is searched for along the version chain of the target row of data, and then the query result is acquired from this version. The version chain is formed by linking different versions of the target row of data through pointers, and each version may include a pointer to the previous version.

It should be noted that the difference between the column format storage and the row format storage of the adjacency list when performing the target exact query task is that each attribute of a row of data of the adjacency list is not continuous in memory and needs to be queried separately.

In response to the target storage format being the dual format, considering that the data in the row format has a relatively lower query cost for performing the exact query task, the target row of data may be searched for in the data in the row format in the leaf node according to the target exact query task, and the query result may be acquired according to the target row of data.

On the basis of any of the above embodiments, the method further includes:
receiving a target column scan task for the adjacency list of the target graph data; and searching, in the index tree of the graph database, for the leaf node where the adjacency list of the target graph data is located according to the target column scan task;
traversing each row of data in the leaf node, and acquiring, from each row of data, a target attribute queried by the target column scan task, in response to the target storage format being the row format; or
acquiring, in the leaf node, attribute column of data, creation time column of data and deletion time column of data queried by the target column scan task, and acquiring the target attribute queried by the target column scan task according to the attribute column of data, the creation time column of data and the deletion time column of data, in response to the target storage format being the column format;
acquiring, in the data in the column format in the leaf node, attribute column of data, creation time column of data and deletion time column of data queried by the target column scan task, and acquiring the target attribute queried by the target column scan task according to the attribute column of data, the creation time column of data and the deletion time column of data, in response to the target storage format being a dual format.

In this embodiment, for the target column scan task, for example, querying attributes that meet a preset condition in a certain attribute column of the adjacency list in Fig. 4 and Fig. 5, whether the adjacency list of the target graph data uses the row format or the column format, it is necessary to first search for the leaf node leaf (K1-K5) where the adjacency list of the target graph data is located in the index tree;
further, in response to the target storage format being the row format, each row of data is traversed in the leaf node, and the target attribute queried by the target column scan task is acquired from each row of data. In a specific implementation, after the leaf node where the adjacency list is located is located, each row of data is traversed according to the pointer array (Pointer Array), and then whether the version of the row of data meets the required version requirements is determined. For example, MVCC requires that the version creation time must match the creation time of the target exact query task. If the required version requirements are not met, the version that meets the required version requirements is searched for along the version chain of the row of data, the target attribute required to be queried is then acquired from this version, and then whether the target attribute of the row of data meets the preset condition is determined.

In response to the target storage format being the column format, the attribute column of data, the creation time column of data and the deletion time column of data queried by the target column scan task are acquired in the leaf node, and the target attribute queried by the target column scan task is acquired according to the attribute column of data, the creation time column of data and the deletion time column of data. In this embodiment, considering that it is not easy to link each version in the column format by using the version chain, the creation time column of data and the deletion time column of data may be focused on, to determine the version of the target attribute, so as to find the target attribute that meets the preset condition and the required version requirements. The required version requirements are met means that the time of the required version falls between the creation time and the deletion time.

In response to the target storage format being the dual format, considering that the data in the column format has a relatively lower query cost for performing the column scan task, the target column scan task may be performed on the data in the column format in the leaf node.

On the basis of any of the above embodiments, in the leaf node, data not pointed to by the pointer array (Pointer Array) may be cleaned through garbage collection, that is, the compact compression process in Fig. 4 and Fig. 5, thus realizing the recycling of storage resources.

Corresponding to the method for processing a graph database in the above embodiments, Fig. 6 is a structural block diagram of a device for processing a graph database provided by at least one embodiment of the present disclosure. For convenience of explanation, only parts related to at least one embodiment of the present disclosure are shown. Referring to Fig. 6, the device for processing a graph database 600 includes: a predicting unit 601, a format determining unit 602, and a storing unit 603.

The predicting unit 601 is configured to predict, according to a historical query task set for an adjacency list of target graph data in a graph database, a first cumulative query cost indicator when the adjacency list is stored in a row format and a second cumulative query cost indicator when the adjacency list is stored in a column format;
the format determining unit 602 is configured to determine a target storage format of the adjacency list according to the first cumulative query cost indicator and the second cumulative query cost indicator; and
the storing unit 603 is configured to store the adjacency list in a leaf node of an index tree of the graph database by using the target storage format.

According to the device for processing a graph database provided by at least one embodiment of the present disclosure, a first cumulative query cost indicator when an adjacency list is stored in a row format and a second cumulative query cost indicator when the adjacency list is stored in a column format are predicted according to a historical query task set for the adjacency list of target graph data in a graph database; a target storage format of the adjacency list is determined according to the first cumulative query cost indicator and the second cumulative query cost indicator; and the adjacency list is stored in a leaf node of an index tree of the graph database by using the target storage format. **In** the embodiment, for the adjacency list of the target graph data, in combination with the historical query task set, the target storage format of the adjacency list is dynamically selected by measuring query costs of different storage formats, which may reduce storage costs, avoid unnecessary data redundancy, optimize resource utilization, and improve query performance of a query task.

In one or more embodiments of the present disclosure, the predicting unit 601 is configured to, when predicting, according to the historical query task set for the adjacency list of the target graph data in the graph database, the first cumulative query cost indicator when the adjacency list is stored in the row format and the second cumulative query cost indicator when the adjacency list is stored in the column format:
acquire task scale features of an exact query task and a column scan task included in the historical query task set, where the task scale features include the count of rows of data queried by the query tasks and the count of attributes queried in the rows of data; and
predict, according to the task scale features of the exact query task and the column scan task, the first cumulative query cost indicator when the adjacency list is stored in the row format and the second cumulative query cost indicator when the adjacency list is stored in the column format.

In one or more embodiments of the present disclosure, the predicting unit 601 is configured to, when predicting, according to the task scale features of the exact query task and the column scan task, the first cumulative query cost indicator when the adjacency list is stored in the row format and the second cumulative query cost indicator when the adjacency list is stored in the column format:
determine cost features of various types of query tasks of the adjacency list in different storage formats; and
predict, according to the task scale features and the cost features of the exact query task and the column scan task, the first cumulative query cost indicator when the adjacency list is stored in the row format and the second cumulative query cost indicator when the adjacency list is stored in the column format.

In one or more embodiments of the present disclosure, the cost features include a first cost constant, a second cost constant, a first unit cost, a second unit cost, and a third unit cost;
where the first cost constant is an average cost indicator of each query task of the adjacency list for positioning leaf node, caching overhead and read and writing overhead, the second cost constant is an average cost indicator of each query task of the adjacency list for row of data positioning and row of data version query, the first unit cost is an average cost indicator of any query task for single attribute query in any row of data when the adjacency list is stored in the row format, and the second unit cost and the third unit cost are respectively an average cost indicator of the exact query task and an average cost indicator of the column scan task for single attribute query in any column of data when the adjacency list is stored in the column format.

In one or more embodiments of the present disclosure, the predicting unit 601 is configured to, when predicting, according to the task scale features and the cost features of the exact query task and the column scan task, the first cumulative query cost indicator when the adjacency list is stored in the row format:
for any query task of the exact query task and the column scan task, determining a query cost indicator of any row of data according to the count of attributes queried in the row of data, the first unit cost and the second cost constant; and determining a query cost indicator of the query task according to the query cost indicator of any row of data, the count of rows of data queried and the first cost constant; and
accumulating the query cost indicators of the query tasks to obtain the first cumulative query cost indicator when the adjacency list is stored in the row format.

In one or more embodiments of the present disclosure, the predicting unit 601 is configured to, when predicting, according to the task scale features and the cost features of the exact query task and the column scan task, the second cumulative query cost indicator when the adjacency list is stored in the column format:
for any exact query task, determining a query cost indicator of any row of data according to the number of attributes queried in the row of data, the second unit cost and the second cost constant; and determining a query cost indicator of the exact query task according to the query cost indicator of any row of data, the number of rows of data queried and the first cost constant;
for any column scan task, determining a query cost indicator of any column of data according to the number of rows of data queried and the second unit cost; and determining a query cost indicator of the column scan task according to the query cost indicator of any column of data, the number of attributes queried in the row of data and the first cost constant; and
accumulating the query cost indicator of each exact query task and the query cost indicator of each column scan task to obtain the second cumulative query cost indicator when the adjacency list is stored in the column format.

In one or more embodiments of the present disclosure, the format determining unit 602 is configured to, when determining the target storage format of the adjacency list according to the first cumulative query cost indicator and the second cumulative query cost indicator:
determining that the target storage format is a dual format in response to the first cumulative query cost indicator and the second cumulative query cost indicator both exceeding a preset cost threshold, where the dual format is a coexistence of the row format and the column format;
determining a difference between the first cumulative query cost indicator and the second cumulative query cost indicator in response to at least one of the first cumulative query cost indicator and the second cumulative query cost indicator not exceeding the preset cost threshold;
determining that the target storage format is a storage format corresponding to a smaller one of the first cumulative query cost indicator and the second cumulative query cost indicator in response to the difference exceeding a preset difference;
determining that the target storage format is a current storage format in response to the difference does not exceeding the preset difference.

In one or more embodiments of the present disclosure, the storing unit 603 is configured to, when storing the adjacency list by using the target storage format:
cleaning data in a non-target storage format of the adjacency list through garbage collection, in response to a current storage format of the adjacency list being a dual format and the target storage format being the row format or the column format; or
converting data in the current storage format of the adjacency list into data in the target storage format, in response to the current storage format of the adjacency list being not the dual format and the target storage format being different from the current storage format.

In one or more embodiments of the present disclosure, the storing unit 603 is configured to, when converting the data in the current storage format of the adjacency list into the data in the target storage format:
store incremental data of the adjacency list into additional storage space;
acquire a snapshot of existing data in the current storage format of the adjacency list, and acquire the data in the target storage format of the adjacency list according to the snapshot; and
write the incremental data in the additional storage space into the data in the target storage format, and stop storing subsequent incremental data of the adjacency list into the additional storage space, and directly write the subsequent incremental data of the adjacency list into the data in the target storage format.

In one or more embodiments of the present disclosure, the storing unit 603 is further configured to, after converting the data in the current storage format of the adjacency list into the data in the target storage format:
clean the data in the current storage format of the adjacency list through garbage collection in response to the target storage format being not the dual format.

In one or more embodiments of the present disclosure, the device further includes a querying unit 604, configured to:
receive a target exact query task for the adjacency list of the target graph data; and search, in the index tree of the graph database, for a leaf node where the adjacency list of the target graph data is located according to the target exact query task;
search for target row of data in the leaf node according to the target exact query task, and acquire a query result according to the target row of data, in response to the target storage format being the row format or the column format;
search for target row of data in data in the row format in the leaf node according to the target exact query task, and acquire a query result according to the target row of data, in response to the target storage format being a dual format.

In one or more embodiments of the present disclosure, the querying unit 604 is further configured to:
receive a target column scan task for the adjacency list of the target graph data; and search, in the index tree of the graph database, for the leaf node where the adjacency list of the target graph data is located according to the target column scan task;
traverse each row of data in the leaf node, and acquire, from each row of data, a target attribute queried by the target column scan task, in response to the target storage format being the row format;
acquire, in the leaf node, attribute column of data, creation time column of data and deletion time column of data queried by the target column scan task, and acquire the target attribute queried by the target column scan task according to the attribute column of data, the creation time column of data and the deletion time column of data, in response to the target storage format being the column format;
acquire, in the data in the column format in the leaf node, attribute column of data, creation time column of data and deletion time column of data queried by the target column scan task, and acquire the target attribute queried by the target column scan task according to the attribute column of data, the creation time column of data and the deletion time column of data, in response to the target storage format being a dual format.

The device provided by this embodiment may be used to implement the technical solutions of the above method embodiments, and the implementation principles and technical effects thereof are similar, and details are not repeated here in this embodiment.

In order to implement the above embodiments, at least one embodiment of the present disclosure further provides an electronic device.

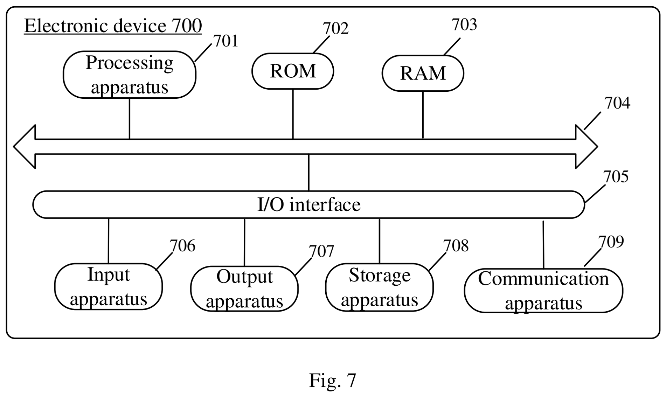

Referring to Fig. 7, Fig. 7 shows a schematic structural diagram of an electronic device 700 suitable for implementing at least one embodiment of the present disclosure, and the electronic device 700 may be a terminal device or a server. The terminal device may include, but not limited to, a mobile terminal such as a mobile phone, a notebook computer, a digital broadcast receiver, a personal digital assistant (abbreviated as PDA), a tablet computer, a portable media player (abbreviated as PMP), a vehicle-mounted terminal (such as a vehicle navigation terminal), etc., and a fixed terminal such as a digital TV, a desktop computer, etc. The electronic device shown in Fig. 7 is only an example, and should not bring any limitation to the function and scope of use of at least one embodiment of the present disclosure.

As shown in Fig. 7, the electronic device 700 may include a processing apparatus (such as a central processing unit, a graphics processor, etc.) 701, which may perform various appropriate actions and processes according to a program stored in a read-only memory (abbreviated as ROM) 702 or a program loaded from a storage apparatus 708 into a random access memory (abbreviated as RAM) 703. In the RAM 703, various programs and data required for the operation of the electronic device 700 are also stored. The processing apparatus 701, the ROM 702 and the RAM 703 are connected to each other through a bus 704. An input/output (I/O) interface 705 is also connected to the bus 704.

Usually, the following apparatus may be connected to the I/O interface 705: an input apparatus 706 including, for example, a touch screen, a touchpad, a keyboard, a mouse, a camera, a microphone, an accelerometer, a gyroscope, etc.; an output apparatus 707 including, for example, a liquid crystal display (Liquid Crystal Display, LCD for short), a speaker, a vibrator, etc.; a storage apparatus 708 including, for example, a magnetic tape, a hard disk, etc.; and a communication apparatus 709. The communication apparatus 709 may allow the electronic device 700 to perform wireless or wired communication with other devices to exchange data. Although Fig. 7 shows the electronic device 700 with various apparatuses, it should be understood that it is not required to implement or have all of the shown apparatuses. More or fewer apparatuses may alternatively be implemented or provided.

In particular, according to the embodiments of the present disclosure, the process described above with reference to the flowchart may be implemented as a computer software program. For example, the embodiments of the present disclosure include a computer program product, which includes a computer program carried on a computer-readable storage medium, and the computer program contains program code for performing the method shown in the flowchart. **In** such an embodiment, the computer program may be downloaded and installed from a network through the communication apparatus 709, or installed from the storage apparatus 708, or installed from the ROM 702. When the computer program is executed by the processing apparatus 701, the above-mentioned functions defined in the method of at least one embodiment of the present disclosure are executed.

It should be noted that the above computer-readable storage medium in the present disclosure may be a computer-readable signal medium, a computer-readable storage medium, or any combination of the two. The computer-readable storage medium may be, for example, but not limited to, an electronic, magnetic, optical, electromagnetic, infrared, or semiconductor system, apparatus or device, or any combination of the above. More specific examples of the computer-readable storage medium may include, but are not limited to: an electrically connected portable computer magnetic disk with one or more wires, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium that contains or stores a program, and the program may be used by or in combination with an instruction execution system, apparatus, or device. In the present disclosure, a computer-readable signal medium may include a data signal propagated in a baseband or as a part of a carrier wave, and computer-readable program code is carried therein. This propagated data signal may take many forms, including, but not limited to, an electromagnetic signal, an optical signal, or any suitable combination of the above. The computer-readable signal medium may also be any computer-readable storage medium other than the computer-readable storage medium, and the computer-readable signal medium may send, propagate, or transmit the program used by or in combination with the instruction execution system, apparatus or device. The program code contained on the computer-readable storage medium may be transmitted by any suitable medium, including, but not limited to: a wire, an optical cable, an RF (radio frequency), etc., or any suitable combination of the above.

The above computer-readable storage medium may be included in the above electronic device; or may exist alone without being assembled into the electronic device.

The above computer-readable storage medium carries one or more programs, and when the above one or more programs are executed by the electronic device, the electronic device is caused to execute the method shown in the above embodiments.

The computer program code for executing the operations of the present disclosure may be written in one or more programming languages or a combination thereof. The above programming languages include object-oriented programming languages such as Java, Smalltalk, C++, and conventional procedural programming languages such as "C" language or similar programming languages. The program code may be executed entirely on a user's computer, partly executed on a user's computer, executed as an independent software package, partly executed on a user's computer and partly executed on a remote computer, or entirely executed on a remote computer or a server. In the case of involving a remote computer, the remote computer may be connected to a user's computer through any kind of network, including a local area network (abbreviated as LAN) or a wide area network (abbreviated as WAN), or it may be connected to an external computer (for example, connected by using Internet provided by an Internet service provider).

The flowchart and block diagrams in the drawings illustrate the architecture, functionality, and operation of possible implementations of systems, methods and computer program products according to various embodiments of the present disclosure. In this regard, each block in the flowchart or block diagrams may represent a module, program segment, or portion of code, which includes one or more executable instructions for implementing the specified logical function(s). It should also be noted that, in some alternative implementations, the functions noted in the block may occur in an order different from that noted in the drawings. For example, two blocks shown in succession may, in fact, be executed substantially concurrently, or the blocks may sometimes be executed in a reverse order, depending upon the functionality involved. It will also be noted that each block of the block diagrams and/or flowchart, and combinations of blocks in the block diagrams and/or flowchart, may be implemented by special purpose hardware-based systems that perform the specified functions or operations, or combinations of special purpose hardware and computer instructions.

The involved units described in at least one embodiment of the present disclosure may be implemented by software or hardware. The name of the unit does not constitute a limitation on the unit itself under certain circumstances. For example, the first acquiring unit may also be described as "a unit for acquiring at least two internet protocol addresses".

The functions described herein above may be performed, at least in part, by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

According to the electronic device, the computer-readable storage medium, and the computer program product provided by at least one embodiment of the present disclosure, a first cumulative query cost indicator when an adjacency list is stored in a row format and a second cumulative query cost indicator when the adjacency list is stored in a column format are predicted according to a historical query task set for the adjacency list of target graph data in a graph database; a target storage format of the adjacency list is determined according to the first cumulative query cost indicator and the second cumulative query cost indicator; and the adjacency list is stored in a leaf node of an index tree of the graph database by using the target storage format. In the embodiment, for the adjacency list of the target graph data, in combination with the historical query task set, the target storage format of the adjacency list is dynamically selected by measuring query costs of different storage formats, which may reduce storage costs, avoid unnecessary data redundancy, optimize resource utilization, and improve query performance of a query task.

According to one or more embodiments of the present disclosure, a method for processing a graph database is provided, including:
predicting, according to a historical query task set for an adjacency list of target graph data in a graph database, a first cumulative query cost indicator when the adjacency list is stored in a row format and a second cumulative query cost indicator when the adjacency list is stored in a column format;
determining a target storage format of the adjacency list according to the first cumulative query cost indicator and the second cumulative query cost indicator; and
storing the adjacency list in a leaf node of an index tree of the graph database by using the target storage format.

According to one or more embodiments of the present disclosure, predicting, according to the historical query task set for the adjacency list of the target graph data in the graph database, the first cumulative query cost indicator when the adjacency list is stored in the row format and the second cumulative query cost indicator when the adjacency list is stored in the column format includes:
acquiring task scale features of query tasks included in the historical query task set, where the task scale features include the count of rows of data queried by a query task and the count of attributes queried in the rows of data; and
predicting, according to the task scale features of the query tasks, the first cumulative query cost indicator when the adjacency list is stored in the row format and the second cumulative query cost indicator when the adjacency list is stored in the column format.

According to one or more embodiments of the present disclosure, predicting, according to the task scale features of the query tasks, the first cumulative query cost indicator when the adjacency list is stored in the row format and the second cumulative query cost indicator when the adjacency list is stored in the column format includes:
determining unit cost indicators of query behaviors in various types of query tasks of the adjacency list in different storage formats, where the types of the query tasks include an exact query task and a column scan task;
predicting, according to the task scale feature of each query task and the unit cost indicators, a query cost indicator of each query task when the adjacency list is stored in the row format and a query cost indicator of each query task when the adjacency list is stored in the column format; and
accumulating the query cost indicators of the query tasks when the adjacency list is stored in the row format to obtain the first cumulative query cost indicator, and accumulating the query cost indicators of the query tasks when the adjacency list is stored in the column format to obtain the second cumulative query cost indicator.

According to one or more embodiments of the present disclosure, determining the target storage format of the adjacency list according to the first cumulative query cost indicator and the second cumulative query cost indicator includes:
determining that the target storage format is a dual format in response to the first cumulative query cost indicator and the second cumulative query cost indicator both exceeding a preset cost threshold, where the dual format is a coexistence of a row format and a column format;
determining a difference between the first cumulative query cost indicator and the second cumulative query cost indicator in response to at least one of the first cumulative query cost indicator and the second cumulative query cost indicator not exceeding the preset cost threshold;
determining that the target storage format is a storage format corresponding to a smaller one of the first cumulative query cost indicator and the second cumulative query cost indicator in response to the difference exceeding a preset difference;
determining that the target storage format is a current storage format in response to the difference not exceeding the preset difference.

According to one or more embodiments of the present disclosure, storing the adjacency list by using the target storage format includes:
cleaning data in a non-target storage format of the adjacency list through garbage collection, in response to a current storage format of the adjacency list being a dual format and the target storage format being the row format or the column format;
converting data in the current storage format of the adjacency list into data in the target storage format, in response to the current storage format of the adjacency list being not the dual format and the target storage format being different from the current storage format.

According to one or more embodiments of the present disclosure, converting the data in the current storage format of the adjacency list into the data in the target storage format includes:
storing incremental data of the adjacency list into additional storage space;
acquiring a snapshot of existing data in the current storage format of the adjacency list, and acquiring the data in the target storage format of the adjacency list according to the snapshot; and
writing the incremental data in the additional storage space into the data in the target storage format, and stopping storing subsequent incremental data of the adjacency list into the additional storage space, and directly writing the subsequent incremental data of the adjacency list into the data in the target storage format.

According to one or more embodiments of the present disclosure, after converting the data in the current storage format of the adjacency list into the data in the target storage format, the method further includes:
cleaning the data in the current storage format of the adjacency list through garbage collection in response to the target storage format being not the dual format.

According to one or more embodiments of the present disclosure, the method further includes:
receiving a target exact query task for the adjacency list of the target graph data;
searching, in the index tree of the graph database, for a leaf node where the adjacency list of the target graph data is located according to the target exact query task;
searching for target row of data in the leaf node according to the target exact query task, and acquiring a query result according to the target row of data in response to the target storage format being the row format or the column format; or
searching for target row of data in data in the row format in the leaf node according to the target exact query task, and acquiring a query result according to the target row of data, in response to the target storage format being a dual format.

According to one or more embodiments of the present disclosure, the method further includes:
receiving a target column scan task for the adjacency list of the target graph data;
searching, in the index tree of the graph database, for the leaf node where the adjacency list of the target graph data is located according to the target column scan task;
traversing each row of data in the leaf node, and acquiring, from each row of data, a target attribute queried by the target column scan task, in response to the target storage format being the row format;
acquiring, in the leaf node, attribute column of data, creation time column of data and deletion time column of data queried by the target column scan task, and acquiring the target attribute queried by the target column scan task according to the attribute column of data, the creation time column of data and the deletion time column of data, in response to the target storage format being the column format;
acquiring, in the data in the column format in the leaf node, attribute column of data, creation time column of data and deletion time column of data queried by the target column scan task, and acquiring the target attribute queried by the target column scan task according to the attribute column of data, the creation time column of data and the deletion time column of data, in response to the target storage format being a dual format.

According to one or more embodiments of the present disclosure, provided is a device for processing a graph database, including:
a predicting unit, configured to predict, according to a historical query task set for an adjacency list of target graph data in a graph database, a first cumulative query cost indicator when the adjacency list is stored in a row format and a second cumulative query cost indicator when the adjacency list is stored in a column format;
a format determining unit, configured to determine a target storage format of the adjacency list according to the first cumulative query cost indicator and the second cumulative query cost indicator; and
a storing unit, configured to store the adjacency list in a leaf node of an index tree of the graph database by using the target storage format.

According to one or more embodiments of the present disclosure, the predicting unit is configured to, when predicting, according to the historical query task set for the adjacency list of the target graph data in the graph database, the first cumulative query cost indicator when the adjacency list is stored in the row format and the second cumulative query cost indicator when the adjacency list is stored in the column format:
acquire task scale features of query tasks included in the historical query task set, where the task scale features include the count of rows of data queried by a query task and the count of attributes queried in the rows of data; and
predict, according to the task scale features of the query tasks, the first cumulative query cost indicator when the adjacency list is stored in the row format and the second cumulative query cost indicator when the adjacency list is stored in the column format.

According to one or more embodiments of the present disclosure, the predicting unit is configured to, when predicting, according to the task scale features of the query tasks, the first cumulative query cost indicator when the adjacency list is stored in the row format and the second cumulative query cost indicator when the adjacency list is stored in the column format:
determine unit cost indicators of query behaviors in various types of query tasks of the adjacency list in different storage formats, where the types of the query tasks include an exact query task and a column scan task;
predict, according to the task scale feature of each query task and the unit cost indicators, a query cost indicator of each query task when the adjacency list is stored in the row format and a query cost indicator of each query task when the adjacency list is stored in the column format; and
accumulate the query cost indicators of the query tasks when the adjacency list is stored in the row format to obtain the first cumulative query cost indicator, and accumulate the query cost indicators of the query tasks when the adjacency list is stored in the column format to obtain the second cumulative query cost indicator.

According to one or more embodiments of the present disclosure, the format determining unit is configured to, when determining the target storage format of the adjacency list according to the first cumulative query cost indicator and the second cumulative query cost indicator:
determine that the target storage format is a dual format in response to the first cumulative query cost indicator and the second cumulative query cost indicator both exceeding a preset cost threshold, where the dual format is a coexistence of the row format and the column format;
determine a difference between the first cumulative query cost indicator and the second cumulative query cost indicator in response to at least one of the first cumulative query cost indicator and the second cumulative query cost indicator not exceeding the preset cost threshold;
determine that the target storage format is a storage format corresponding to a smaller one of the first cumulative query cost indicator and the second cumulative query cost indicator in response to the difference exceeding a preset difference;
determine that the target storage format is a current storage format in response to the difference not exceeding the preset difference.

According to one or more embodiments of the present disclosure, the storing unit is configured to, when storing the adjacency list by using the target storage format:
clean data in a non-target storage format of the adjacency list through garbage collection, in response to a current storage format of the adjacency list being a dual format and the target storage format being the row format or the column format;
convert data in the current storage format of the adjacency list into data in the target storage format, in response to the current storage format of the adjacency list being not the dual format and the target storage format being different from the current storage format.

According to one or more embodiments of the present disclosure, the storing unit is configured to, when converting the data in the current storage format of the adjacency list into the data in the target storage format:
store incremental data of the adjacency list into additional storage space;
acquire a snapshot of existing data in the current storage format of the adjacency list, and acquire the data in the target storage format of the adjacency list according to the snapshot; and
write the incremental data in the additional storage space into the data in the target storage format, and stop storing subsequent incremental data of the adjacency list into the additional storage space, and directly write the subsequent incremental data of the adjacency list into the data in the target storage format.

According to one or more embodiments of the present disclosure, the storing unit is further configured to, after converting the data in the current storage format of the adjacency list into the data in the target storage format:
clean the data in the current storage format of the adjacency list through garbage collection in response to the target storage format being not the dual format.

According to one or more embodiments of the present disclosure, the device further includes a querying unit, configured to:
receive a target exact query task for the adjacency list of the target graph data; and search, in the index tree of the graph database, for a leaf node where the adjacency list of the target graph data is located according to the target exact query task;
search for target row of data in the leaf node according to the target exact query task, and acquire a query result according to the target row of data, in response to the target storage format being the row format or the column format; or
search for target row of data in data in the row format in the leaf node according to the target exact query task, and acquire a query result according to the target row of data, in response to the target storage format being a dual format.

According to one or more embodiments of the present disclosure, the querying unit is further configured to:
receive a target column scan task for the adjacency list of the target graph data; and search, in the index tree of the graph database, for the leaf node where the adjacency list of the target graph data is located according to the target column scan task;
traverse each row of data in the leaf node, and acquire, from each row of data, a target attribute queried by the target column scan task, in response to the target storage format being the row format;
acquire, in the leaf node, attribute column of data, creation time column of data and deletion time column of data queried by the target column scan task, and acquire the target attribute queried by the target column scan task according to the attribute column of data, the creation time column of data and the deletion time column of data, in response to the target storage format being the column format;
acquire, in the data in the column format in the leaf node, attribute column of data, creation time column of data and deletion time column of data queried by the target column scan task, and acquire the target attribute queried by the target column scan task according to the attribute column of data, the creation time column of data and the deletion time column of data, in response to the target storage format being a dual format.

According to one or more embodiments of the present disclosure, an electronic device is provided, including: at least one processor and a memory,
where the memory has computer-executable instructions stored thereon; and
the at least one processor is configured to execute the computer-executable instructions stored in the memory, so as to cause the at least one processor to execute the method for processing a graph database described above.

According to one or more embodiments of the present disclosure, a computer-readable storage medium is provided, where computer-executable instructions are stored in the computer-readable storage medium, and when the computer-executable instructions are executed by a processor, the method for processing a graph database described above is implemented.

According to one or more embodiments of the present disclosure, a computer program product is provided, including a computer program, where when the computer program is executed by a processor, the method for processing a graph database described above is implemented.

In summary, it may be seen that a first cumulative query cost indicator when an adjacency list is stored in a row format and a second cumulative query cost indicator when the adjacency list is stored in a column format are predicted according to a historical query task set for the adjacency list of target graph data in a graph database; a target storage format of the adjacency list is determined according to the first cumulative query cost indicator and the second cumulative query cost indicator; and the adjacency list is stored in a leaf node of an index tree of the graph database by using the target storage format. In the embodiment, for the adjacency list of the target graph data, in combination with the historical query task set, the target storage format of the adjacency list is dynamically selected by measuring query costs of different storage formats, which may reduce storage costs, avoid unnecessary data redundancy, optimize resource utilization, and improve query performance of a query task.

The above description is only preferred embodiments of the present disclosure and an explanation of the applied technical principles. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the above concept of disclosure. For example, the above features and the technical features provided in the present disclosure (but not limited to) with similar functions may be replaced each other to form a technical solution.

In addition, although operations are depicted in a specific order, this should not be understood as requiring these operations to be performed in the specific order shown or in a sequential order. Under certain circumstances, multitasking and parallel processing may be beneficial. Similarly, although several specific implementation details are included in the above discussion, these should not be interpreted as limiting the scope of the present disclosure. Some features described in the context of separate embodiments may also be implemented in a single embodiment in combination. On the contrary, various features described in the context of a single embodiment may also be implemented in multiple embodiments individually or in any suitable sub-combination.

Although the subject matter has been described in a language specific to structural features and/or logical actions of the method, it should be understood that the subject matter defined in the appended claims is not necessarily limited to the specific features or actions described above. On the contrary, the specific features and actions described above are only exemplary forms for implementing the claims.

## Claims

1. A method for processing a graph database, comprising:
predicting, according to a historical query task set for an adjacency list of target graph data in the graph database, a first cumulative query cost indicator when the adjacency list is stored in a row format and a second cumulative query cost indicator when the adjacency list is stored in a column format (S201);
determining a target storage format of the adjacency list according to the first cumulative query cost indicator and the second cumulative query cost indicator (S202); and
storing the adjacency list in a leaf node of an index tree of the graph database by using the target storage format (S203).

2. The method for processing the graph database of claim 1, wherein the predicting, according to the historical query task set for the adjacency list of the target graph data in the graph database, the first cumulative query cost indicator when the adjacency list is stored in the row format and the second cumulative query cost indicator when the adjacency list is stored in the column format (S201) comprises:
acquiring task scale features of query tasks comprised in the historical query task set, wherein the task scale features comprise a count of rows of data queried by a query task and a count of attributes queried in the rows of data; and
predicting, according to the task scale features of the query tasks, the first cumulative query cost indicator when the adjacency list is stored in the row format and the second cumulative query cost indicator when the adjacency list is stored in the column format.

3. The method for processing the graph database of claim 2, wherein the predicting, according to the task scale features of the query tasks, the first cumulative query cost indicator when the adjacency list is stored in the row format and the second cumulative query cost indicator when the adjacency list is stored in the column format comprises:
determining unit cost indicators of query behaviors in various types of query tasks of the adjacency list in different storage formats, wherein the types of the query tasks comprise an exact query task and a column scan task;
predicting, according to task scale feature of each query task and the unit cost indicators, a query cost indicator of each query task when the adjacency list is stored in the row format and a query cost indicator of each query task when the adjacency list is stored in the column format; and
accumulating query cost indicators of the query tasks when the adjacency list is stored in the row format to obtain the first cumulative query cost indicator, and accumulating the query cost indicators of the query tasks when the adjacency list is stored in the column format to obtain the second cumulative query cost indicator.

4. The method for processing the graph database of any one of claims 1-3, wherein the determining the target storage format of the adjacency list according to the first cumulative query cost indicator and the second cumulative query cost indicator (S202) comprises:
determining that the target storage format is a dual format in response to the first cumulative query cost indicator and the second cumulative query cost indicator both exceeding a preset cost threshold, wherein the dual format is a coexistence of the row format and the column format;
determining a difference between the first cumulative query cost indicator and the second cumulative query cost indicator in response to at least one of the first cumulative query cost indicator and the second cumulative query cost indicator not exceeding the preset cost threshold;
determining that the target storage format is a storage format corresponding to a smaller one of the first cumulative query cost indicator and the second cumulative query cost indicator, in response to the difference exceeding a preset difference; and
determining that the target storage format is a current storage format in response to the difference not exceeding the preset difference.

5. The method for processing the graph database of any one of claims 1-4, wherein the storing the adjacency list by using the target storage format (S203) comprises:
cleaning data in a non-target storage format of the adjacency list through garbage collection, in response to a current storage format of the adjacency list being a dual format and the target storage format being the row format or the column format; and
converting data in the current storage format of the adjacency list into data in the target storage format, in response to the current storage format of the adjacency list being not the dual format and the target storage format being different from the current storage format.

6. The method for processing the graph database of claim 5, wherein the converting the data in the current storage format of the adjacency list into the data in the target storage format comprises:
storing incremental data of the adjacency list into additional storage space (S301);
acquiring a snapshot of existing data in the current storage format of the adjacency list, and acquiring the data in the target storage format of the adjacency list according to the snapshot (S302); and
writing the incremental data in the additional storage space into the data in the target storage format, and stopping storing subsequent incremental data of the adjacency list into the additional storage space, and directly writing the subsequent incremental data of the adjacency list into the data in the target storage format (S303).

7. The method for processing the graph database of claim 5 or 6, wherein after the converting the data in the current storage format of the adjacency list into the data in the target storage format, the method for processing the graph database further comprises:
cleaning the data in the current storage format of the adjacency list through garbage collection in response to the target storage format being not the dual format.

8. The method for processing the graph database of any one of claims 1-7, further comprising:
receiving a target exact query task for the adjacency list of the target graph data;
searching, in the index tree of the graph database, for the leaf node where the adjacency list of the target graph data is located according to the target exact query task;
searching for target row of data in the leaf node according to the target exact query task and acquiring a query result according to the target row of data, in response to the target storage format being the row format or the column format; and
searching for target row of data in data in the row format in the leaf node according to the target exact query task and acquiring a query result according to the target row of data, in response to the target storage format being a dual format.

9. The method for processing the graph database of any one of claims 1-8, further comprising:
receiving a target column scan task for the adjacency list of the target graph data;
searching, in the index tree of the graph database, for the leaf node where the adjacency list of the target graph data is located according to the target column scan task;
traversing each row of data in the leaf node and acquiring, from each row of data, a target attribute queried by the target column scan task, in response to the target storage format being the row format;
acquiring, in the leaf node, attribute column of data, creation time column of data and deletion time column of data queried by the target column scan task and acquiring the target attribute queried by the target column scan task according to the attribute column of data, the creation time column of data and the deletion time column of data, in response to the target storage format being the column format; and
acquiring, in the data in the column format in the leaf node, attribute column of data, creation time column of data and deletion time column of data queried by the target column scan task and acquiring the target attribute queried by the target column scan task according to the attribute column of data, the creation time column of data and the deletion time column of data, in response to the target storage format being a dual format.

10. A device for processing a graph database, comprising:
a predicting unit (601), configured to predict, according to a historical query task set for an adjacency list of target graph data in the graph database, a first cumulative query cost indicator when the adjacency list is stored in a row format and a second cumulative query cost indicator when the adjacency list is stored in a column format;
a format determining unit (602), configured to determine a target storage format of the adjacency list according to the first cumulative query cost indicator and the second cumulative query cost indicator; and
a storing unit (603), configured to store the adjacency list in a leaf node of an index tree of the graph database by using the target storage format.

11. An electronic device, comprising at least one processor (701) and a memory (708),
wherein the memory (708) has computer-executable instructions stored thereon; and
the at least one processor (701) is configured to execute the computer-executable instructions stored in the memory (708), to execute the method for processing the graph database according to any of claims 1-9.

12. A non-transitory computer-readable storage medium, storing computer-executable instructions, wherein when the computer-executable instructions are executed by at least one processor, the method for processing the graph database according to any of claims 1-9 is implemented.

13. A computer program product, comprising a computer program, wherein when the computer program is executed by at least one processor, the method for processing the graph database according to any of claims 1-9 is implemented.
